# EUROPEAN PATENT SPECIFICATION

(11) **EP 2 538 591 B1**
(45) Date of publication and mention of the grant of the patent: **07.08.2013**
(21) Application number: 11170767.5
(22) Date of filing: 21.06.2011
(51) Int. Cl.: H04J 14/02

(54) **Wavelength division multiplexed passive optical network apparatus and methods of configuration**
Passive optische Multiplex-Netzwerkvorrichtung mit Wellenlängentrennung und Konfigurationsverfahren
Appareil de réseau optique passif multiplexé de division de longueur d'onde optique et procédés de configuration

(43) Date of publication of application: 26.12.2012
(73) Proprietor: Telefonaktiebolaget L M Ericsson (publ), 164 83 Stockholm (SE)
(72) Inventor: Grosso, Renato, 16127 Genova (IT)
(74) Representative: Parkinson, Neil Scott

(56) References cited:
- WO-A1-2011/020503
- US-A1- 2007 092 256
- SUZUKI H ET AL: "Demonstration of plug-and-play function by automatically controlling tunable DWDM-SFP transceiver for coexistence-type colorless WDM-PONs", OFC/NFOEC 2008. 2008 OPTICAL FIBER COMMUNICATION CONFERENCE/NATIONAL FIBER OPTIC ENGINEERS CONFERENCE ,SAN DIEGO, CA, IEEE SERVICE CENTER, PISCATAWAY, NJ, 1 January 2008 (2008-01-01), pages 2507-2509, XP002580930, ISBN: 978-1-55752-855-1

## Description

### Technical Field

The invention relates to a method of configuring a wavelength division multiplexed passive optical network. The invention further relates to a method of configuring an optical network terminal of a wavelength division multiplexed passive optical network. The invention further relates to a method of configuring an optical line terminal of a wavelength division multiplexed passive optical network. The invention further relates to an optical line terminal for a wavelength division multiplexed passive optical network. The method further relates to an optical network terminal for a wavelength division multiplexed passive optical network. The invention further relates to a wavelength division multiplexed passive optical network.

### Background

Wavelength division multiplexed, WDM, passive optical networks, PON, are increasingly moving towards using "colourless" optical network terminals/optical network units, ONT/ONU, which can have their operating wavelength tuned to meet the operating wavelength of the optical line terminal, OLT, port to which they are assigned. This is typically done by tuning the transmission wavelength of an optical filter at the ONT, for both remotely seeded ONTs and for ONTs where the upstream optical carrier is locally generated, for example by a tunable laser.

Configuration of a WDM PON requires discovery of the presence of unassigned ONTs and tuning of the ONT operating wavelength to that of the OLT port to which it is to be assigned. In a WDM PON in which the remote node comprises an arrayed waveguide grating, AWG, the operating wavelength of the ONT can be set by tuning the operating wavelength through a pre-selected set of operating wavelengths and using loss of signal, LOS, alarm signaling to determine whether the OLT has received an upstream optical signal at a selected wavelength, as described in W02011/020503.

Where the WDM PON remote node comprises a simple power splitter, such as where a gigabit enabled PON, GPON, is to be upgraded to WDM PON operation or coexistence, a downstream optical signal from an OLT port is received by each unassigned ONT and more than one upstream handshake optical signal may be received by an OLT port in response to a downstream optical signal due to more than one unassigned ONT selecting the same operating wavelength. One solution to this is to provide information to the OLT identifying each ONT which is to be assigned to it. The OLT ports can then call for each ONT one by one. However this process must be sequential and may therefore be slow, and has the further disadvantage of requiring the provision of the identities of each ONT which is expected to be assigned to an OLT.

### Summary

It is an object to provide an improved method of configuring a wavelength division multiplexed passive optical network. It is a further object to provide an improved method of configuring an optical network terminal of a wavelength division multiplexed passive optical network. It is a further object to provide an improved method of configuring an optical line terminal of a wavelength division multiplexed passive optical network. It is a further object to provide an improved optical line terminal for a wavelength division multiplexed passive optical network. It is a further object to provide an improved optical network terminal for a wavelength division multiplexed passive optical network. It is a further object to provide an improved wavelength division multiplexed passive optical network.

A first aspect of the invention provides a method of configuring a wavelength division multiplexed passive optical network. The network comprises an optical line terminal and a plurality of optical network terminals each comprising a tunable optical filter. The method comprises step a., which comprises identifying a plurality of ports of the optical line terminal each of which do not have a said optical network terminal assigned to it. One said port is selected and a wavelength availability signal is generated and transmitting from the selected port. The wavelength availability signal is indicative of a respective operating wavelength of each identified port. The method further comprises step b., which comprises, at each of a plurality of unassigned optical network terminals:
i. Receiving the wavelength availability signal and tuning a transmission wavelength of the respective tunable optical filter until the wavelength availability signal is transmitted by the filter;
ii. Generating a wavelength sequence of the respective operating wavelengths of the identified ports;
iii. Sequentially setting the transmission wavelength of the tunable optical filter at the wavelengths of the wavelength sequence and generating and transmitting a handshake signal at each wavelength until the wavelength availability signal is no longer received;
The method further comprises step c., which comprises, at said selected port, determining a number of handshake signals received at its respective operating wavelength. If more than one handshake signal has been received, transmission of the wavelength availability signal is continued. If only one handshake signal has been received, transmission of the wavelength availability signal ceases and the optical network terminal which transmitted said handshake signal is assigned to said selected port for operation at its operating wavelength.

The method may reduce the occurrence of handshake signal collisions, where more than one handshake signal is received at a port, which may reduce the time taken for an optical network terminal to be assigned to a port as compared to prior art methods of assigning optical network terminals to optical line terminal ports. The method may be applied independent of the type of colourless optical network terminal. The method may enable reuse of existing deployed gigabit enabled passive optical network, GPON, infrastructure for network upgrade to coexistence of GPON and WDM PON even where the remote node of the GPON is a simple optical power splitter.

In an embodiment, step a. comprises generating wavelength availability signal indicative of a respective operating wavelength of each of said plurality of identified ports and transmitting the wavelength availability signal from each of said plurality of identified ports. Step c. comprises, at each of said plurality of identified ports, determining a number of handshake signals received at the respective operating wavelength. If more than one handshake signal has been received at a said port, transmission of the wavelength availability signal is continued from said port. If only one handshake signal has been received at said port, transmission of the wavelength availability signal is ceased from each of said plurality of identified ports and the optical network terminal which transmitted said handshake signal is assigned to said port for operation at its respective operating wavelength, and the method is then recommenced at step a.

The method may therefore be used to simultaneously carry out the assignment of optical network terminals at a plurality of optical line terminal ports.

In an embodiment, step a. comprises identifying every port of the optical line terminal which does not have a said optical network terminal assigned to it. Step a. further comprises generating a wavelength availability signal indicative of a respective operating wavelength of every said identified port and transmitting the wavelength availability signal from every said identified port. Step c. comprises, at every said identified port, determining a number of handshake signals received at the respective operating wavelength. If more than one handshake signal has been received at a said port, transmission of the wavelength availability signal is continued from said port. If only one handshake signal has been received at said port, transmission of the wavelength availability signal is ceased from every said identified port and the optical network terminal which transmitted said handshake signal is assigned to said port for operation at its respective operating wavelength, and the method is recommenced at step a.

The method may therefore be used to simultaneously carry out the assignment of optical network terminals at every unassigned port of an optical line terminal.

In an embodiment, each wavelength sequence is generated by selecting the received operating wavelengths of the unassigned ports from a random sequence of a plurality of transmission wavelengths of the network. This may reduce the likelihood of more than one optical network terminal generating and transmitting a handshake signal at the same wavelength, which may reduce the occurrence of handshake signal collisions at an optical line terminal port. This may also reduce the time taken for an optical network terminal to be assigned to a port.

In an embodiment, a respective random sequence is generated by each optical network terminal when electrical power to the optical network terminal is switched on.

In an embodiment, the random sequence is generated using a random number generator to generate a sequence of wavelength index. The generator is seeded by one of thermal noise, an avalanche zener diode and a pseudo-random number generator. Generating the random sequence using a random number generator may enhance the randomness of the random sequence, which may reduce the occurrence of handshake signal collisions and thus reduce the time taken for an optical network terminal to be assigned to a port.

In an embodiment, the random sequence is different for each unassigned optical network terminal. This may further reduce the occurrence of handshake signal collisions and the time taken for an optical network terminal to be assigned to a port.

In an embodiment, the transmission wavelength of each tunable optical filter is tuned through each wavelength of the respective random sequence until the wavelength availability signal is transmitted by the filter.

In an embodiment, each wavelength availability signal and each handshake signal has a bit rate which is lower than a transmission bit rate at which each optical line terminal port is arranged to transmit signals carrying communications traffic. This may enable the method properly to operate in the presence of at least one of high splitting ratios at the remote node and high optical power loss in the WDM PON. This may enable the method properly to operate independent of the quality of the wavelength availability signal received at each optical network terminal.

In an embodiment, each wavelength availability signal and each handshake signal has a low speed signal format. In an embodiment, each wavelength availability signal and each handshake signal is an Electronics Industry Association RS232 standard signal.

In an embodiment, the RS232 standard signal has a bit rate of kilo bits per second and has ASCII coding, comprising an asynchronous start-stop character and a 7 or 8 bit signal format.

In an embodiment, each wavelength availability signal comprises a sequence of the available wavelengths, the sequence having a start indicator. When an optical network terminal receives a wavelength availability signal it waits until it has received the start indicator before reading the wavelength sequence.

A second aspect of the invention provides an optical line terminal for a wavelength division multiplexed passive optical network. The optical line terminal comprises a plurality of ports and configuration control apparatus. Each port has a respective operating wavelength. The configuration control apparatus is arranged to:
a. identify a plurality of ports each of which does not have an optical network terminal assigned to it;
b. select a said port, and generate and transmit a wavelength availability signal from the selected port indicative of a respective operating wavelength of each identified port;
c. determine a number of handshake signals received at the selected port at its respective operating wavelength. The configuration control apparatus is arranged to continue transmission of the wavelength availability signal if more than one handshake signal has been received. The configuration control apparatus is further arranged to cease transmission of the wavelength availability signal if only one handshake signal has been received, and to assign the optical network terminal from which the handshake signal was received to the selected port for operation at its operating wavelength.

The occurrence of handshake signal collisions, where more than one handshake signal is received at a port, may be reduced by the optical line terminal which may reduce the time taken for an optical network terminal to be assigned to a port as compared to prior art optical line terminals. The optical line terminal may be used with known types of colourless optical network terminal. The optical line terminal may be used with existing deployed gigabit enabled passive optical network, GPON, infrastructure to enable network upgrade to coexistence of GPON and WDM PON even where the remote node of the GPON is a simple optical power splitter.

In an embodiment, the configuration control apparatus is arranged to b., generate a wavelength availability signal indicative of a respective operating wavelength of each of said plurality of identified ports and to transmit the wavelength availability signal from each of said plurality of identified ports. The configuration control apparatus is further arranged to c., determine a number of handshake signals received at each of said plurality of identified ports at the respective operating wavelength. The configuration control apparatus is arranged to continue transmission of the wavelength availability signal from said port if more than one handshake signal has been received at a said port. The configuration control apparatus is further arranged to cease transmission of the wavelength availability signal from each of said plurality of identified ports if only one handshake signal has been received at a said port. The configuration control apparatus is further arranged to assign the optical network terminal which transmitted said handshake signal to said port for operation at its respective operating wavelength and to recommence operation at a.

The optical line terminal may be operated to simultaneously carry out the assignment of optical network terminals to a plurality of ports.

In an embodiment, the configuration control apparatus is arranged at a. to identify every port of the optical line terminal which does not have a said optical network terminal assigned to it. The configuration control apparatus is further arranged at a. to generate a wavelength availability signal indicative of a respective operating wavelength of every said identified port and to transmit the wavelength availability signal from every said identified port. The configuration control apparatus is arranged, at every said identified port, to c. determine a number of handshake signals received at the respective operating wavelength. If more than one handshake signal has been received at a said port, the configuration control apparatus is arranged to continue transmission of the wavelength availability signal from said port. If only one handshake signal has been received at said port, the configuration control apparatus is arranged to cease transmission of the wavelength availability signal from every said identified port and to assign the optical network terminal which transmitted said handshake signal to said port for operation at its respective operating wavelength, and to recommence operation at a.

The optical line terminal may be operated to simultaneously carry out the assignment of optical network terminals to every unassigned port.

In an embodiment, each wavelength availability signal has a bit rate which is lower than a transmission bit rate at which each optical line terminal port is arranged to transmit signals carrying communications traffic. This may enable the optical line terminal properly to assign optical network terminals to its ports even in the presence of at least one of high splitting ratios at the remote node and high optical power loss in the WDM PON. This may enable the optical line terminal properly to operate independent of the quality of the wavelength availability signal when it is received at each optical network terminal.

In an embodiment, each wavelength availability signal is an Electronics Industry Association RS232 standard signal.

In an embodiment, the RS232 standard signal has a bit rate of kilo bits per second and has ASCII coding, comprising an asynchronous start-stop character and a 7 or 8 bit signal format.

In an embodiment, each wavelength availability signal comprises a sequence of the available wavelengths, the sequence having a start indicator.

A third aspect of the invention provides a method of configuring an optical line terminal of a wavelength division multiplexed passive optical network. The optical line terminal comprises a plurality of ports each having a respective operating wavelength. The method comprises step a. comprising identifying a plurality of said ports each of which does not have an optical network terminal assigned to it. The method further comprises step b. which comprises selecting a said port, and generating and transmitting a wavelength availability signal from the selected port indicative of a respective operating wavelength of each identified port. The method further comprises step c. which comprises determining a number of handshake signals received at the selected port at its respective operating wavelength. If more than one handshake signal has been received, transmission of the wavelength availability signal, is continued. If only one handshake signal has been received, transmission of the wavelength availability signal is ceased and the optical network terminal from which the handshake signal was received is assigned to the selected port for operation at its operating wavelength.

The method may reduce the occurrence of handshake signal collisions, where more than one handshake signal is received at a port, which may reduce the time taken for an optical network terminal to be assigned to a port as compared to prior art methods of assigning optical network terminals to optical line terminal ports. The method may be applied independent of the type of colourless optical network terminal. The method may enable reuse of existing deployed gigabit enabled passive optical network, GPON, infrastructure for network upgrade to coexistence of GPON and WDM PON even where the remote node of the GPON is a simple optical power splitter.

In an embodiment, step a. comprises generating wavelength availability signal indicative of a respective operating wavelength of each of said plurality of identified ports and transmitting the wavelength availability signal from each of said plurality of identified ports. Step c. comprises, at each of said plurality of identified ports, determining a number of handshake signals received at the respective operating wavelength. If more than one handshake signal has been received at a said port, transmission of the wavelength availability signal from said port. If only one handshake signal has been received at said port, transmission of the wavelength availability signal is ceased from each of said plurality of identified ports and the optical network terminal which transmitted said handshake signal is assigned to said port for operation at its respective operating wavelength, and the method is then recommenced at step a.

The method may therefore be used to simultaneously carry out the assignment of optical network terminals to a plurality of optical line terminal ports.

In an embodiment, step a. comprises identifying every port of the optical line terminal which does not have a said optical network terminal assigned to it. Step a. further comprises generating a wavelength availability signal indicative of a respective operating wavelength of every said identified port and transmitting the wavelength availability signal from every said identified port. Step c. comprises, at every said identified port, determining a number of handshake signals received at the respective operating wavelength. If more than one handshake signal has been received at a said port, transmission of the wavelength availability signal is continued from said port. If only one handshake signal has been received at said port, transmission of the wavelength availability signal is ceased from every said identified port and the optical network terminal which transmitted said handshake signal is assigned to said port for operation at its respective operating wavelength, and the method is recommenced at step a.

The method may therefore be used to simultaneously carry out the assignment of optical network terminals to every unassigned port of an optical line terminal.

In an embodiment, each wavelength availability signal has a bit rate which is lower than a transmission bit rate at which each optical line terminal port is arranged to transmit signals carrying communications traffic. This may enable the method properly to operate in the presence of at least one of high splitting ratios at the remote node and high optical power loss in a WDM PON to which the optical line terminal is connected. This may enable the method properly to operate independent of the quality of the wavelength availability signal received at each optical network terminal.

In an embodiment, each wavelength availability signal is an Electronics Industry Association RS232 standard signal.

In an embodiment, the RS232 standard signal has a bit rate of kilo bits per second and has ASCII coding, comprising an asynchronous start-stop character and a 7 or 8 bit signal format.

In an embodiment, each wavelength availability signal comprises a sequence of the available wavelengths, the sequence having a start indicator. This may ensure that when an optical network terminal receives a wavelength availability signal it waits until it has received the start indicator before reading the wavelength sequence.

A fourth aspect of the invention provides an optical network terminal for a passive optical network. The optical network terminal is arranged to receive a wavelength availability signal indicative of a respective operating wavelength of a plurality of unassigned ports of an optical line terminal of the passive optical network. The optical network terminal comprises a tunable optical filter having a transmission wavelength and configuration control apparatus. The configuration control apparatus is arranged to:
i. tune the transmission wavelength of the tunable optical filter until the wavelength availability signal is transmitted by the filter;
ii. generate a wavelength sequence of the respective operating wavelengths of said plurality of unassigned ports;
iii. sequentially set the transmission wavelength of the tunable optical filter at the wavelengths of the wavelength sequence and generate and transmit a handshake signal at each wavelength until the wavelength availability signal is no longer received.

The optical network terminal may be operated to reduce the occurrence of handshake signal collisions at an optical line terminal port to which it is attempting to be assigned. This may reduce the time taken for an optical network terminal to be assigned to a port as compared to prior art optical network terminals. The optical network terminal may enable reuse of existing deployed gigabit enabled passive optical network, GPON, infrastructure for network upgrade to coexistence of GPON and WDM PON even where the remote node of the GPON is a simple optical power splitter.

In an embodiment, the optical network terminal further comprises a random sequence generator arranged to generate a random sequence of a plurality of transmission wavelengths of the network and the configuration control apparatus is arranged to:
ii. select the received operating wavelengths of said plurality of unassigned ports from the random sequence to form a wavelength sequence of the respective operating wavelengths of the unassigned ports.

In an embodiment, the random sequence generator comprises a random number generator arranged to generate a sequence of wavelength index. The random number generator is seeded by one of thermal noise, an avalanche zener diode and a pseudo-random number generator. Generating the random sequence using a random number generator may enhance the randomness of the random sequence, which may reduce the occurrence of handshake signal collisions and thus reduce the time taken for an optical network terminal to be assigned to a port.

In an embodiment, the random sequence generator is arranged to generate a random sequence when electrical power to the optical network terminal is switched on.

In an embodiment, the configuration control apparatus is arranged to tune the transmission wavelength of the tunable optical filter through each wavelength of the random sequence until the wavelength availability signal is transmitted by the filter.

In an embodiment, each handshake signal has a bit rate which is lower than a transmission bit rate at which each optical network terminal port is arranged to transmit signals carrying communications traffic. This may enable the optical network terminal properly to operate in the presence of at least one of high splitting ratios at the remote node and high optical power loss in the WDM PON.

In an embodiment, each handshake signal is an Electronics Industry Association RS232 standard signal.

In an embodiment, the RS232 standard signal has a bit rate of kilo bits per second and has ASCII coding, comprising an asynchronous start-stop character and a 7 or 8 bit signal format.

In an embodiment, the wavelength availability signal comprises a sequence of the available wavelengths, the sequence having a start indicator. The configuration control apparatus is arranged to wait until it has received the start indicator before reading the wavelength sequence of a received wavelength availability signal.

A fifth aspect of the invention provides a method of configuring an optical network terminal of a passive optical network. The optical network terminal comprises a tunable optical filter and is arranged to receive a wavelength availability signal indicative of a respective operating wavelength of a plurality of unassigned ports of an optical line terminal of the passive optical network. The method comprises:
i. tuning a transmission wavelength of the tunable optical filter until the wavelength availability signal is transmitted by the filter;
ii. generating a wavelength sequence of the respective operating wavelengths of said plurality of unassigned ports; and
iii. sequentially setting the transmission wavelength of the tunable optical filter at the wavelengths of the wavelength sequence and generating and transmitting a handshake signal at each wavelength until the wavelength availability signal is no longer received.

The method may reduce the occurrence of handshake signal collisions, where more than one handshake signal is received at a port, at an optical line terminal port to which an optical network terminal is to be assigned. This may reduce the time taken for an optical network terminal to be assigned to a port as compared to prior art methods of assigning optical network terminals to optical line terminal ports. The method may be applied independent of the type of colourless optical network terminal. The method may enable reuse of existing deployed gigabit enabled passive optical network, GPON, infrastructure for network upgrade to coexistence of GPON and WDM PON even where the remote node of the GPON is a simple optical power splitter.

In an embodiment, the wavelength sequence is generated by selecting the received operating wavelengths of the unassigned ports from a random sequence of a plurality of transmission wavelengths of the network. This may reduce the likelihood of more than one optical network terminal generating and transmitting a handshake signal at the same wavelength, which may reduce the occurrence of handshake signal collisions at an optical line terminal port to which the optical network terminal is attempting to become assigned. This may also reduce the time taken for an optical network terminal to be assigned to a port.

In an embodiment, a random sequence is generated by the optical network terminal when electrical power to the optical network terminal is switched on.

In an embodiment, the random sequence is generated using a random number generator to generate a sequence of wavelength index. The generator is seeded by one of thermal noise, an avalanche zener diode and a pseudo-random number generator. Generating the random sequence using a random number generator may enhance the randomness of the random sequence, which may reduce the occurrence of handshake signal collisions and thus reduce the time taken for an optical network terminal to be assigned to a port.

In an embodiment, the random sequence is unique to the optical network terminal. This may further reduce the occurrence of handshake signal collisions and the time taken for an optical network terminal to be assigned to a port.

In an embodiment, the transmission wavelength of the tunable optical filter is tuned through each wavelength of the random sequence until the wavelength availability signal is transmitted by the filter.

In an embodiment, each handshake signal has a bit rate which is lower than a transmission bit rate at which each optical line terminal port is arranged to transmit signals carrying communications traffic. This may enable the method properly to operate in the presence of at least one of high splitting ratios at the remote node and high optical power loss in a WDM PON to which the optical network terminal is connected. This may enable the method properly to operate independent of the quality of the wavelength availability signal received at the optical network terminal.

In an embodiment, each wavelength availability signal and each handshake signal is an Electronics Industry Association RS232 standard signal.

In an embodiment, the RS232 standard signal has a bit rate of kilo bits per second and has ASCII coding, comprising an asynchronous start-stop character and a 7 or 8 bit signal format.

In an embodiment, the wavelength availability signal comprises a sequence of the available wavelengths, the sequence having a start indicator. The optical network terminal waits until it has received the start indicator before reading the wavelength sequence. When the optical network terminal receives a wavelength availability signal it waits until it has received the start indicator before reading the wavelength sequence.

A sixth aspect of the invention provides a data carrier having computer readable instructions embodied therein. The said computer readable instructions are for providing access to resources available on a processor. The computer readable instructions comprise instructions to cause the processor to perform any of the above steps of the method of configuring a wavelength division multiplexed passive optical network.

A seventh aspect of the invention provides a data carrier having computer readable instructions embodied therein. The said computer readable instructions are for providing access to resources available on a processor. The computer readable instructions comprise instructions to cause the processor to perform any of the above steps of the method of configuring an optical network terminal of a wavelength division multiplexed passive optical network.

An eighth aspect of the invention provides a data carrier having computer readable instructions embodied therein. The said computer readable instructions are for providing access to resources available on a processor. The computer readable instructions comprise instructions to cause the processor to perform any of the above steps of the method of configuring an optical line terminal of a wavelength division multiplexed passive optical network.

A ninth aspect of the invention provides a wavelength division multiplexed passive optical network comprising an optical line terminal, a plurality of optical network terminals, a remote node, a distribution fibre and a plurality of feeder fibres. The optical line terminal comprises a plurality of ports and configuration control apparatus. Each port has a respective operating wavelength. The configuration control apparatus is arranged to:
a. identify a plurality of ports each of which does not have an optical network terminal assigned to it;
b. select a said port, and generate and transmit a wavelength availability signal from the selected port indicative of a respective operating wavelength of each identified port;
c. determine a number of handshake signals received at the selected port at its respective operating wavelength. The configuration control apparatus is arranged to continue transmission of the wavelength availability signal if more than one handshake signal has been received. The configuration control apparatus is further arranged to cease transmission of the wavelength availability signal if only one handshake signal has been received, and to assign the optical network terminal from which the handshake signal was received to the selected port for operation at its operating wavelength.
Each optical network terminal is arranged to receive a wavelength availability signal indicative of a respective operating wavelength of a plurality of unassigned ports of an optical line terminal of the passive optical network. The optical network terminal comprises a tunable optical filter having a transmission wavelength and configuration control apparatus. The configuration control apparatus is arranged to:
i. tune the transmission wavelength of the tunable optical filter until the wavelength availability signal is transmitted by the filter;
ii. generate a wavelength sequence of the respective operating wavelengths of said plurality of unassigned ports;
iii. sequentially set the transmission wavelength of the tunable optical filter at the wavelengths of the wavelength sequence and generate and transmit a handshake signal at each wavelength until the wavelength availability signal is no longer received.
The distribution fibre is coupled between the optical line terminal and the remote node. Each feeder fibre is coupled between the remote node and a respective said optical network terminal.

The WDM PON may have a reduced occurrence of handshake signal collisions, where more than one handshake signal is received at an optical line terminal port, which may reduce the time taken for an optical network terminal to be assigned to a port as compared to prior art WDM PON structures. The WDM PON may be deployed reusing existing deployed gigabit enabled passive optical network, GPON, infrastructure for network upgrade to coexistence of GPON and WDM PON even where the remote node of the GPON is a simple optical power splitter.

Embodiments of the invention will now be described, by way of example only, with reference to the accompanying drawings.

### Brief description of the drawings

Figure 1 shows the steps of a method according to a first embodiment of the invention of configuring a wavelength division multiplexed passive optical network;
Figure 2 shows the steps of a method according to a second embodiment of the invention of configuring a wavelength division multiplexed passive optical network;
Figure 3 shows the steps of a method according to a third embodiment of the invention of configuring a wavelength division multiplexed passive optical network;
Figure 4 is a diagrammatic representation of an optical line terminal for a wavelength division multiplexed passive optical network according to a fourth embodiment of the invention;
Figure 5 is a diagrammatic representation of an optical network terminal for a wavelength division multiplexed passive optical network according to a seventh embodiment of the invention;
Figure 6 is a diagrammatic representation of an optical network terminal for a wavelength division multiplexed passive optical network according to an eighth embodiment of the invention;
Figure 7 shows the steps of a method according to a ninth embodiment of the invention of configuring an optical line terminal of a wavelength division multiplexed passive optical network;
Figure 8 shows the steps of a method according to a tenth embodiment of the invention of configuring an optical network terminal of a wavelength division multiplexed passive optical network; and
Figure 9 is a diagrammatic representation of a wavelength division multiplexed passive optical network according to an eleventh embodiment of the invention.

### Detailed description

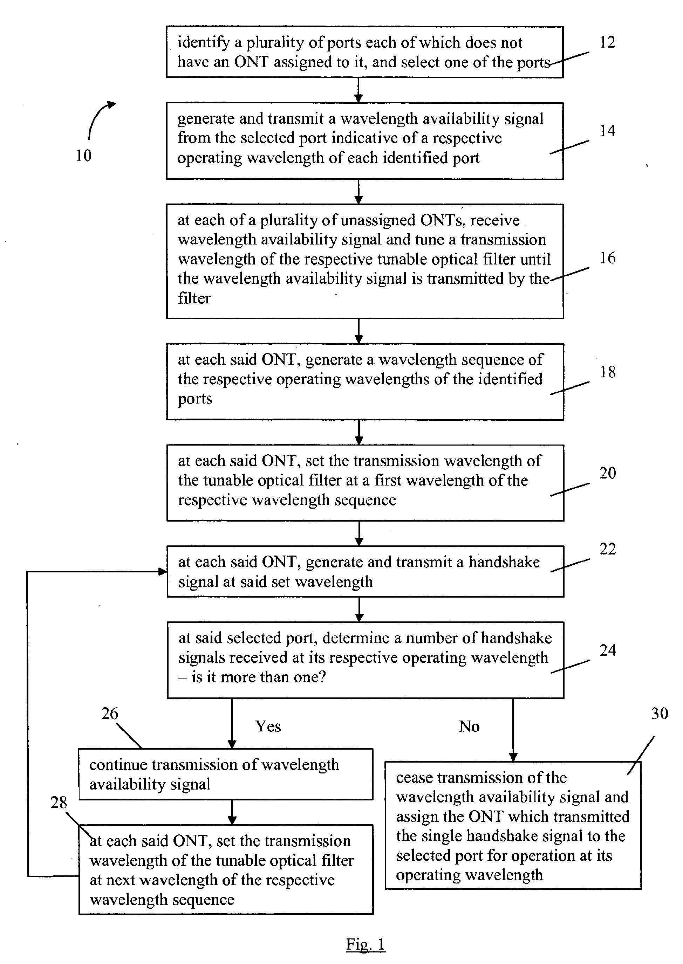

A first embodiment of the invention provides a method 10 of configuring a wavelength division multiplexed, WDM, passive optical network, PON, having the steps shown in Figure 1. The WDM PON comprises an optical line terminal, OLT, and a plurality of optical network terminals, ONTs, each comprising a tunable optical filter. The method 10 comprises:
a. identifying a plurality of ports of the OLT each of which do not have an ONT assigned to it 12, selecting one of the ports 12, and generating and transmitting a wavelength availability signal from the selected port indicative of a respective operating wavelength of each identified port 14;
b. at each of a plurality of unassigned ONTs:
   i. receiving the wavelength availability signal and tuning a transmission wavelength of the respective tunable optical filter until the wavelength availability signal is transmitted by the filter 16;
   ii. generating a wavelength sequence of the respective operating wavelengths of the identified ports;
   iii. sequentially setting the transmission wavelength of the tunable optical filter at the wavelengths of the wavelength sequence 20, 28 and generating and transmitting a handshake signal at each wavelength 22 until the wavelength availability signal is no longer received 30;
c. at the selected port, determining a number of handshake signals received at its respective operating wavelength 24, and if more than one handshake signal has been received, continuing transmission of the wavelength availability signal 26. Each unassigned ONT thus sets the transmission wavelength of its tunable optical filter to the next wavelength in its respective wavelength sequence 28 (as required in iii.). If only one handshake signal has been received, transmission of the wavelength availability signal is ceased and the ONT which transmitted the single received handshake signal is assigned to the selected port for operation at its operating wavelength 30.

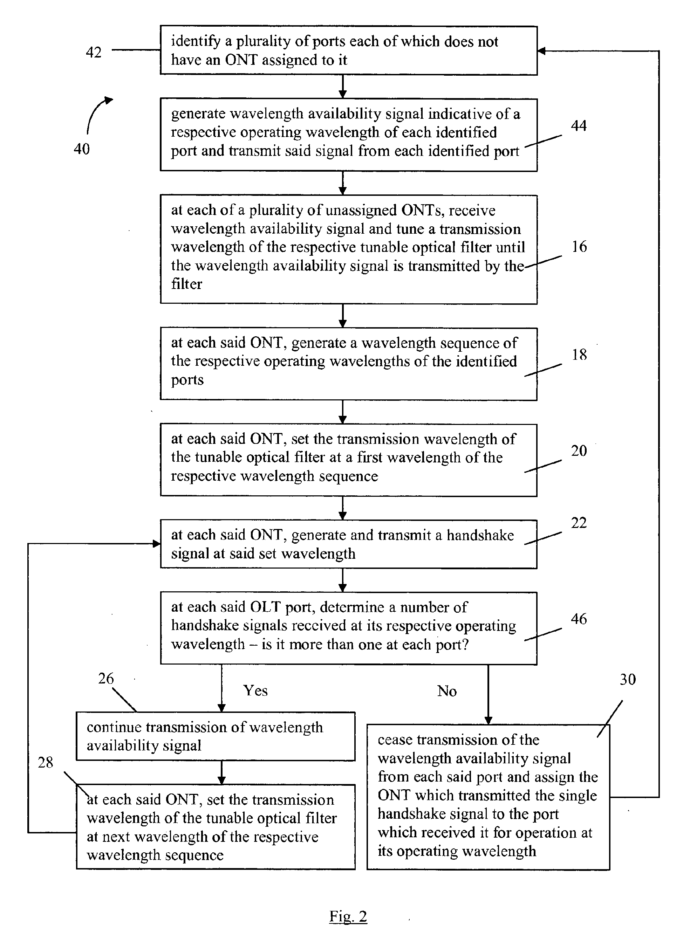

A second embodiment of the invention provides a method 40 of configuring a WDM PON, having the steps shown in Figure 2. The WDM PON which the method 40 of this embodiment is arranged to configure comprises an OLT and a plurality of ONTs each comprising a tunable optical filter. The method 40 of this embodiment is similar to the method 10 of the previous embodiment, with the following modifications. The same reference numbers are retained for corresponding features.

In this embodiment, step a. comprises transmitting the wavelength availability signal from each of the plurality of identified ports 44. Step c. comprises, at each of said plurality of identified ports, determining a number of handshake signals received at the respective operating wavelength 46. If more than one handshake signal has been received at a port, transmission of the wavelength availability signal is continued from that port 26. If only one handshake signal has been received at a port, transmission of the wavelength availability signal ceases from each of the plurality of identified ports and the ONT which transmitted the single received handshake signal to said port is assigned to that port for operation at the operating wavelength of that port. The method then recommences at step a. 42, so the remaining ones of the plurality of OLT ports which do not have an ONT assigned to them are identified and an updated wavelength availability signal is generated and transmitted, which no longer includes any identification of the port or ports to which an ONT was assigned in the previous loop of the method. The method 40 is thus repeated until all of the said plurality of OLT ports have an ONT assigned to them.

The wavelength sequence for each ONT is generated by selecting the operating wavelengths of the plurality of unassigned ports (as received in the wavelength availability signal) from a random sequence of a plurality of transmission wavelengths of the WDM PON. The random sequence consists of a random sequence of the wavelength index, e.g., 1, 5, 15, 3, 24, etc. or 27, 1, 96, 33, etc, of each of the plurality oftransmission wavelengths of the WDM PON. A respective random sequence is generated by each ONT at power on using a random number generator seeded by one of thermal noise, an avalanche zener diode or a pseudo-random number generator. The available wavelengths are then selected from the random sequence to form an effectively random wavelength sequence.

In this embodiment, each wavelength availability signal and each handshake signal has a bit rate which is lower than the transmission bit rate at which each OLT port and each ONT is arranged to transmit communications traffic carrying signals across the WDM PON. Communications traffic is here understood to mean traffic received from elsewhere within the WDM PON that is to be transmitted between the OLT and the ONT. The wavelength availability signals and handshake signals in this embodiment comprise a simple RS232 protocol signal at a bit rate of a few kbps transmitted by means of on-off cycling of the output power of the respective transmitter at each OLT port or ONT. The RS232 signals have ASCII coding, and comprise an asynchronous start-stop character and a 7 or 8 bit signal format. The method thereby provides remote side (downstream) signalling of the set of available wavelengths by means of a low speed communications status. Each free OLT port thereby transmits, by means of this protocol, the set of available wavelengths downstream towards all of the unassigned ONTs.

In more detail, the WDM PON has a remote node comprising a power splitter therefore each ONT comprises a tunable optical filter to ensure that, once assigned, an ONT only receives downstream signals at its operating wavelength. During operation of the WDM PON each ONT will receive, prior to its filter, optical signals at a number of the transmission wavelengths of the network; wavelengths which have already been assigned to an ONT (active wavelengths) will be carrying live communications traffic; and wavelengths which have not yet been assigned (inactive wavelengths) will be carrying RS232 protocol wavelength availability signals.

In this example, the wavelength availability signal comprises a sequence of the wavelength indices of the operating wavelengths of the plurality of identified unassigned OLT ports. The wavelength sequence has sequence boundaries, including a sequence start indicator.

Each ONT tunes the transmission wavelength of its tunable optical filter through the plurality of transmission wavelengths of the WDM PON (this can be done in index order or according to each ONT's random sequence of transmission wavelength indices) until a wavelength availability signal is transmitted by the filter and detected by the ONT. Once an ONT has detected an RS232 wavelength availability signal it waits until the sequence start indicator has been received, and then reads the sequence of available wavelengths. A wavelength sequence is then generated, as described above, and the transmission wavelength of the tunable filter, and, in the case of an ONT comprising a tunable laser arranged to locally generate the upstream optical carrier, the tunable laser operating wavelength, is set to the first wavelength within the wavelength sequence. It will be appreciated that where the ONT is remotely seeded only tuning of the tunable filter will be required whilst where the ONT has a tunable laser arranged to locally generate an upstream optical carrier both the tunable filter and the tunable laser wavelength must be tuned.

A handshake signal is then generated and transmitted at that first wavelength back to the OLT to attempt to signal the presence of the ONT to an OLT port operating at that wavelength and to complete the handshake started by the OLT port transmitting the wavelength availability signal. The handshake signal is also an RS232 signal.

At the respective OLT port, transmission of the RS232 wavelength availability signal continues until the presence of an ONT is detected, as a result of the port receiving a handshake signal at its operating wavelength from a single ONT, and the respective ONT is assigned to the OLT port. Following ONT assignment the OLT port establishes normal communication status and transmission of communications traffic commences between the OLT port and the ONT. The method then recommences and the operating wavelength of this port is left out of the subsequently identified set of OLT ports whose operating wavelengths are transmitted in the next wavelength availability signal.

For example, if the WDM PON has three unassigned ONTs and the OLT has three available ports, each with a respective operating wavelength index 1, 2, 3, a first loop of the method 40 will identify the three available wavelengths and generate and transmit a wavelength availability signal comprising a sequence of the indices. Each ONT receives the sequence and generates its own wavelength sequence of the available wavelengths based on its random sequence of the transmission wavelengths of the network. During the first loop the 3rd ONT will tune its filter to λ2, no collisions occur, i.e. only one handshake signal is received at the OLT port operating at λ2, so the 3^{rd} ONT is assigned to the λ2 port. The 1st and 2nd ONTs both select λ1 as their operating wavelength and a collision therefore occurs at the OLT port operating at λ1. λ3 is not selected by an ONT during the first loop of the method 40. Recommencing the method 40 at step a. (second loop), the OLT port operating at λ2 is no longer free and therefore λ2 is not included in the set of available operating wavelengths indicated in the subsequent wavelength availability signal. The 2nd ONT next tunes its operating wavelength to λ3 and the 1st ONT tunes its operating wavelength to λ1. Since only one handshake signal will be received at each respective OLT port, i.e. no collisions occur at either OLT port, each ONT is assigned to the respective OLT port.

The wavelength sequences of each of the ONTs can be represented as follows, with the successfully selected wavelength circled (each column represents a loop of the method 40):
1^{st} ONT: 1, ①
2^{nd} ONT: 1, ③
3^{rd} ONT. ②

Some further examples of wavelength sequences are give below, for three to six ONT/port wavelengths (variables). Each row corresponds to a different ONT and each column to a loop of the method.

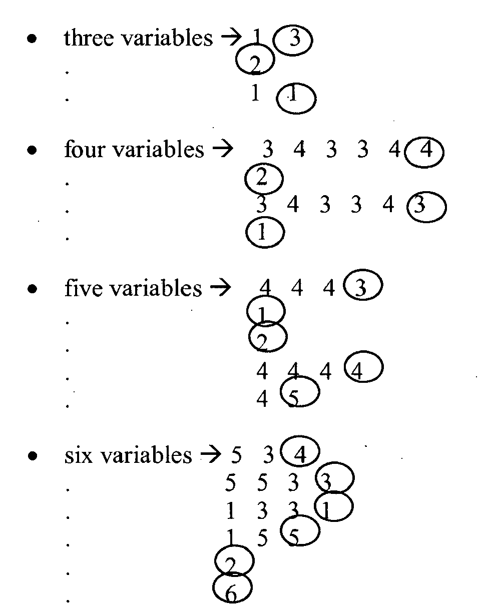

In these examples a maximum of six loops of the method are required to assign all of the ONTs.

The method 40 may be caused to run during network setup, following addition of one or more new ONTs, following a change of location of an ONT and following loss of connection of an ONT.

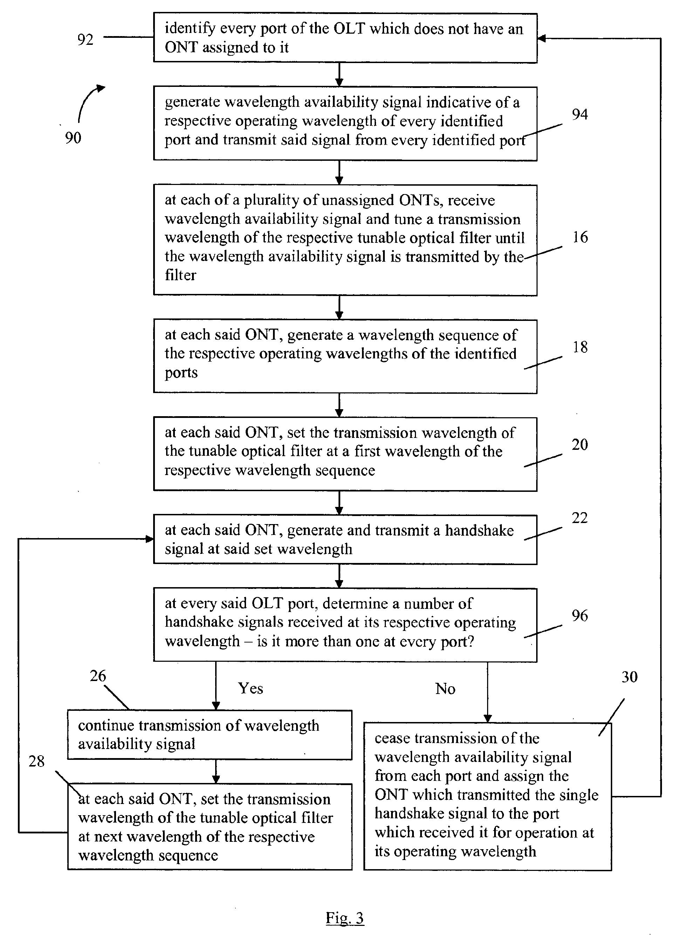

Figure 3 shows the steps of a method of configuring a WDM PON 90 according toa third embodiment of the invention that is similar to the method 40 of Figure 2, with the following modifications. The same reference numbers are retained for corresponding steps.

In this embodiment, step a. comprises identifying every port of the optical line terminal which does not have a said optical network terminal assigned to it 92 and generating a wavelength availability signal indicative of a respective operating wavelength of every said identified port and transmitting the wavelength availability signal from every said identified port 94.

Step c. comprises, at every identified port, determining a number of handshake signals received at the respective operating wavelength 96.

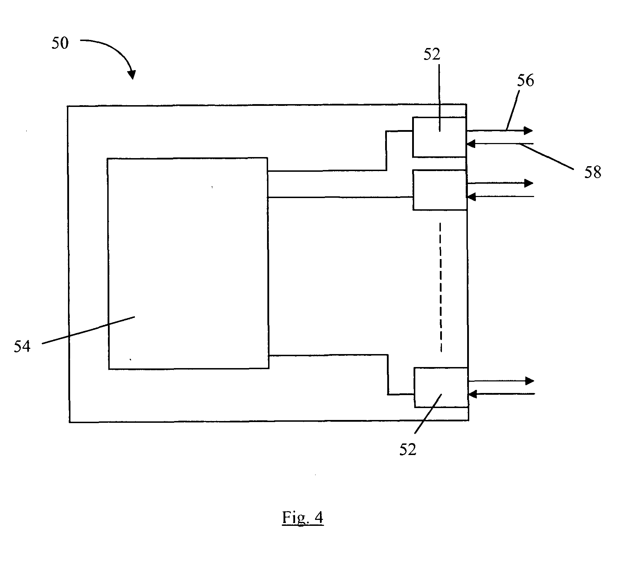

A fourth embodiment of the invention provides an OLT 50 for a WDM PON, as shown in Figure 4. As will be well known to the person skilled in the art a WDM PON comprises an OLT 50, an optical link, a remote node, which here comprises a power splitter, and a plurality of ONTs. Each ONT comprises a tunable optical filter and may be remotely seeded or may comprise a tunable laser arranged to generate an upstream optical signal.

The OLT 50 comprises a plurality of ports 52 and configuration control apparatus 54.

Each port 52 of the OLT 50 has a respective operating wavelength and is arranged to transmit and receive optical signals at its operating wavelength.

The configuration control apparatus 54 is arranged to:
a. identify a plurality of ports 52 each of which does not have an ONT assigned to it;
b. select one of the ports 52, and generate and transmit a wavelength availability signal 56 from the selected port indicative of a respective operating wavelength of each of the identified (unassigned) ports;
c. determine a number of handshake signals 58 received at the selected port at its respective operating wavelength, and
if more than one handshake signal has been received, continue transmission of the wavelength availability signal, and

if only one handshake signal has been received, cease transmission of the wavelength availability signal and assign the ONT from which the handshake signal was received to the selected port for operation at its operating wavelength.

It will therefore be appreciated that the configuration control apparatus 54 is arranged to implement its steps of the methods 10, 40 relating to the OLT described above.

A fifth embodiment of the invention provides an OLT having the same structure as shown in Figure 4, with the following modifications.

In this embodiment, the configuration control apparatus 54 is arranged in step b. to generate a wavelength availability signal 56 indicative of a respective operating wavelength of each port 52 which has been identified as not having an ONT assigned to it. The configuration apparatus 54 is further arranged to transmit the wavelength availability signal from each identified port 52.

In this embodiment, the configuration control apparatus 54 is arranged in step c. to determine a number of handshake signals 58 received at each identified port at the respective operating wavelength. At each port, if more than one handshake signal has been received, transmission of the wavelength availability signal is continued from that port. If only one handshake signal has been received at a port 52, transmission of the wavelength availability signal is ceased by the configuration control apparatus 54 from each identified port. The optical network terminal configuration apparatus 54 is arranged to assign the ONT which transmitted the single handshake signal received by a port 52 for operation at the operating wavelength of that port. The configuration control apparatus 54 is arranged recommence operating at step a.

In this embodiment, each wavelength availability signal has a bit rate which is lower than the transmission bit rate at which each OLT port 52 is arranged to transmit communications traffic carrying signals across the WDM PON. The wavelength availability signals in this embodiment comprise a simple RS232 protocol signal at a bit rate of a few kbps transmitted by means of on-off cycling of the output power of the respective transmitter at each OLT port 52. The RS232 signals have ASCII coding, and comprise an asynchronous start-stop character and a 7 or 8 bit signal format. The OLT 50 is thus arranged to perform remote side (downstream) signalling of the set of available wavelengths by means of a low speed communications status. Each free OLT port 52 is arranged to transmit, by means of this protocol, the set of available wavelengths downstream towards all of the unassigned ONTs of the WDM PON to which it is connected.

A sixth embodiment of the invention provides an OLT having the same structure as shown in Figure 4, with the following modifications.

In this embodiment, the configuration control apparatus 54 is arranged to:
a. identify every port 52 which does not have an ONT assigned to it;
b. generate and transmit a wavelength availability signal 56 from every said identified port indicative of a respective operating wavelength of every said identified port;
c. determine a number of handshake signals 58 received at every said identified port at its respective operating wavelength, and
if more than one handshake signal has been received at a said port, continue transmission of the wavelength availability signal, and
if only one handshake signal has been received at a said port, cease transmission of the wavelength availability signal from every said identified port and assign the ONT from which the handshake signal was received to said port for operation at its operating wavelength, and recommence step a.

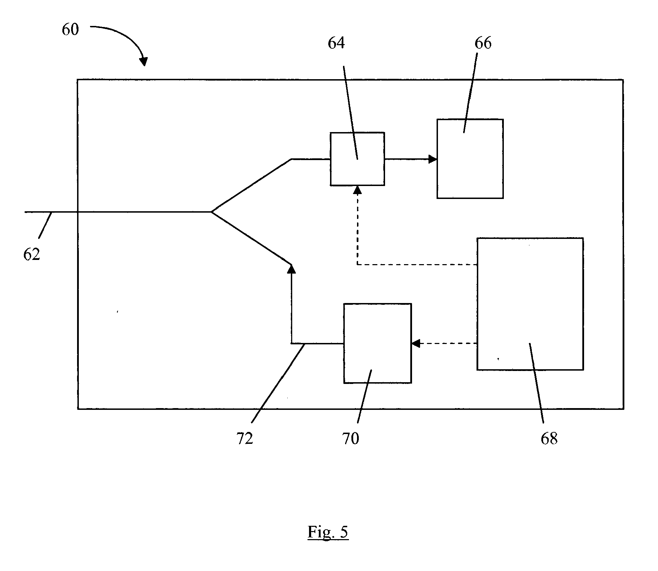

A seventh embodiment of the invention provides an ONT 60 for a WDM PON, as shown in Figure 5. It will be appreciated that the ONT 60 will in use comprise one of a plurality of ONTs within a WDM PON comprising an OLT, an optical link and a remote node in the form of a power splitter.

The ONT 60 is arranged to receive a wavelength availability signal 62 indicative of a respective operating wavelength of a plurality of unassigned ports of an OLT of the WDM PON. The ONT 60 comprises a tunable optical filter 64 having a transmission wavelength and configuration control apparatus 68.

The ONT 60 of this example additionally comprises an optical receiver 66 and an upstream optical transmitter, which comprises a tunable laser 70, arranged to generate an upstream optical signal 72. It will be appreciated that the ONT 60 may alternatively be remotely seeded, with the upstream optical transmitter comprising, for example, a reflective semiconductor optical amplifier, RSOA. The construction and operation of remotely seeded ONTs and ONTs having tunable lasers arranged to generate the upstream optical signal will be well known to the person skilled in the art so will not be described in further detail here.

The configuration control apparatus 68 is arranged to:
i. tune the transmission wavelength of the tunable optical filter until the wavelength availability signal is transmitted by the filter;
ii. generate a wavelength sequence of the respective operating wavelengths of the plurality of unassigned ports; and
iii. sequentially set the transmission wavelength of the tunable optical filter at the wavelengths of the wavelength sequence, and generate and transmit a handshake signal 72 at each wavelength until the wavelength availability signal is no longer received.

It will therefore be appreciated that the configuration control apparatus 68 is arranged to implement its steps of the methods 10, 40 relating to the ONT described above.

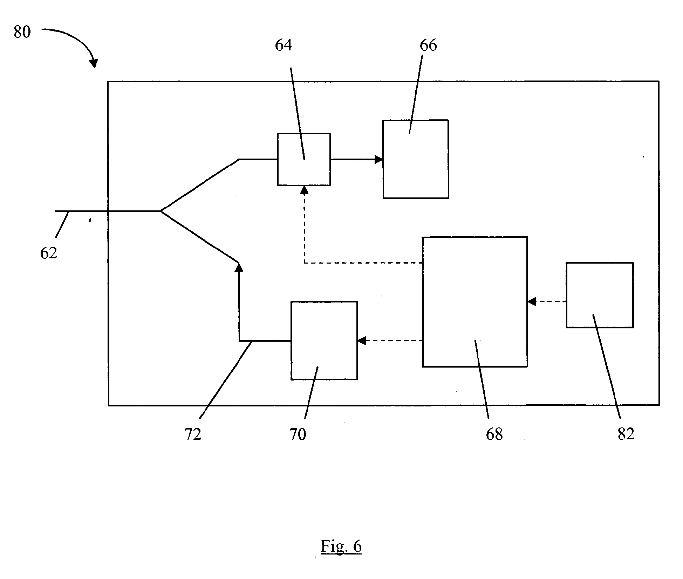

An eighth embodiment of the invention provides an ONT 80 for a WDM PON, as shown in Figure 6. The ONT 80 of this embodiment is similar to the ONT 50 of Figure 5, with the following modifications. The same reference numbers are retained for corresponding features.

In this embodiment, the ONT 80 further comprises a random sequence generator 82 arranged to generate a random sequence of a plurality of transmission wavelengths of the WDM PON. The random sequence generator 82 comprises a random number generator which is arranged to be seeded by one of thermal noise, an avalanche zener diode or a pseudo-random number generator.

The configuration control apparatus 68 is arranged in step ii. to select the received operating wavelengths of the unassigned ports from the random sequence to form a wavelength sequence of the respective operating wavelengths of the plurality of unassigned ports.

The wavelength sequence for each ONT 80 is generated by selecting the operating wavelengths of the plurality of unassigned ports (as received in the wavelength availability signal) from a random sequence of the plurality of transmission wavelengths of the WDM PON. The random sequence consists of a random sequence of the wavelength index, e.g., 1, 5, 15, 3, 24, etc. or 27, 1, 96, 33, etc, of each of the plurality of transmission wavelengths of the WDM PON.

In this embodiment, the received wavelength availability signal and each handshake signal has a bit rate which is lower than the transmission bit rate at which communications traffic carrying signals are transmitted across the WDM PON. The handshake signals in this embodiment comprise a simple RS232 protocol signal at a bit rate of a few kbps transmitted by means of on-off cycling of the output power of the ONT transmitter 70, which in this example comprises a tunable laser. The RS232 signals have ASCII coding, and comprise an asynchronous start-stop character and a 7 or 8 bit signal format.

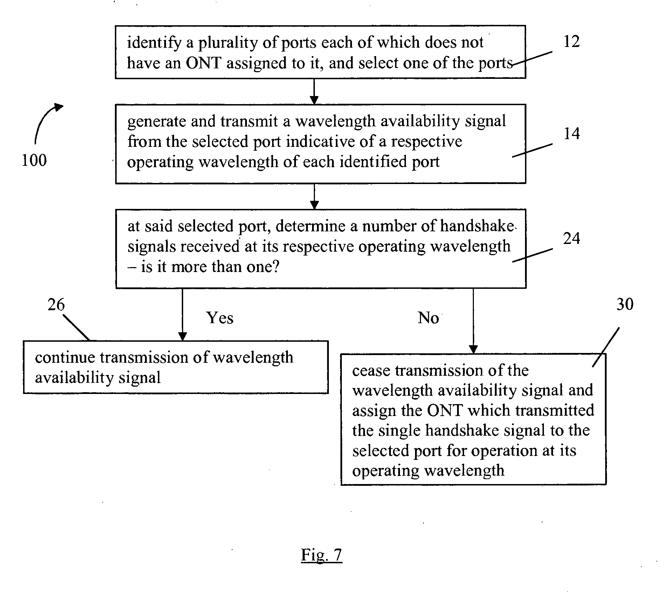

A ninth embodiment of the invention provides a method 100 of configuring an OLT of a WDM PON having the steps shown in Figure 7. The OLT comprises a plurality of ports each having a respective operating wavelength.

The method 100 comprises part of the method 10 of configuring a WDM PON shown in Figure 1. The same reference numbers are retained for corresponding steps.

The method 100 comprises:
a. identifying a plurality of said ports each of which does not have an optical network terminal assigned to it 12;
e. selecting a said port 12, and generating and transmitting a wavelength availability signal from the selected port indicative of a respective operating wavelength of each of said plurality of identified ports 14;
f. determining a number of handshake signals received at the selected port at its respective operating wavelength 24, and
if more than one handshake signal has been received, continuing transmission of the wavelength availability signal 26, and
if only one handshake signal has been received, ceasing transmission of the wavelength availability signal and assigning the optical network terminal from which the handshake signal was received to the selected port for operation at its operating wavelength 30.

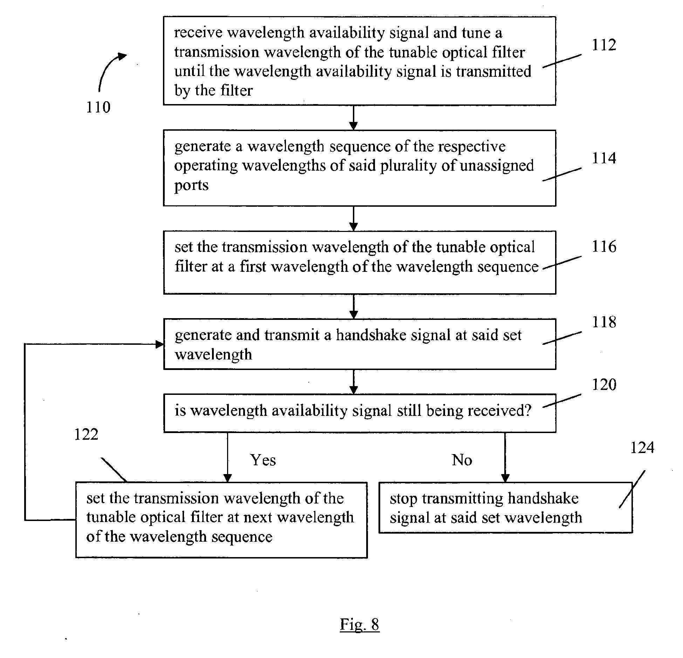

A tenth embodiment of the invention provides a method 110 of configuring an ONT of a WDM PON having the steps shown in Figure 8. The ONT comprises a tunable optical filter and is arranged to receive a wavelength availability signal indicative of a respective operating wavelength of a plurality of unassigned ports of an OLT of the WDM PON.

The method 110 comprises part of the method 10 of configuring a WDM PON shown in Figure 1. The same reference numbers are retained for corresponding steps.

The method 110 comprises:
i. tuning a transmission wavelength of the tunable optical filter until the wavelength availability signal is transmitted by the filter 112;
ii. generating a wavelength sequence of the respective operating wavelengths of said plurality of unassigned ports 114; and
iii. sequentially setting the transmission wavelength of the tunable optical filter at the wavelengths of the wavelength sequence 116, 120, 122 and generating and transmitting a handshake signal at each wavelength 118 until the wavelength availability signal is no longer received 124.

An eleventh embodiment of the invention provides a data carrier having computer readable instructions embodied therein. The computer readable instructions are for providing access to resources available on a processor. The computer readable instructions comprise instructions to cause the processor to perform the steps of either of the methods 10, 40 of configuring a WDM PON described above in Figures 1 to 3.

The data carrier may comprise a hardware device, such as a computer memory device, or may comprise an electrical or optical signal arranged to carry the instructions during transmission or download of the signal.

A twelfth embodiment of the invention provides a data carrier having computer readable instructions embodied therein. The computer readable instructions are for providing access to resources available on a processor. The computer readable instructions comprise instructions to cause the processor to perform the steps the method 100 of configuring an OLT of a WDM PON described above in Figure 7.

A thirteenth embodiment of the invention provides a data carrier having computer readable instructions embodied therein. The computer readable instructions are for providing access to resources available on a processor. The computer readable instructions comprise instructions to cause the processor to perform the steps the method 110 of configuring an ONT of a WDM PON described above in Figure 8.

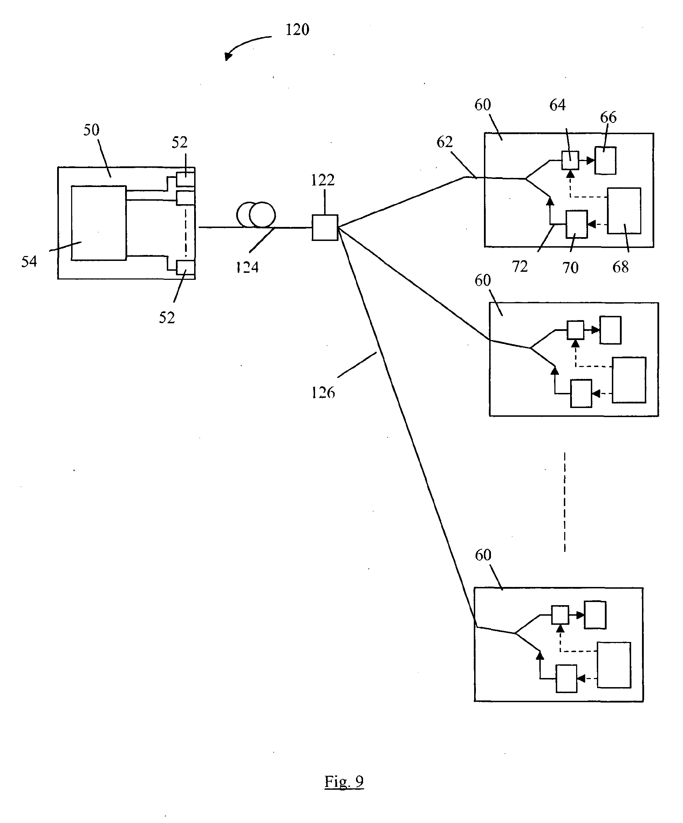

A fourteenth embodiment of the invention provides a WDM PON 120 as shown in Figure 9. The WDM PON 120 comprises an OLT 50 as shown in Figure 4, a plurality of ONTs 60 as shown in Figure 5, a remote node 122, a distribution fibre 124 coupled between the OLT and the remote node, and a plurality of feeder fibres 126 each coupled between the remote node and a respective ONT.

## Claims

1. A method (10, 40) of configuring a wavelength division multiplexed passive optical network comprising an optical line terminal and a plurality of optical network terminals each comprising a tunable optical filter, the method comprising:
a. identifying a plurality of ports of the optical line terminal each of which do not have a said optical network terminal assigned to it (12), selecting a said port (12), and generating and transmitting a wavelength availability signal from the selected port indicative of a respective operating wavelength of each identified port (14);
b. at each of a plurality of unassigned optical network terminals:
i. receiving the wavelength availability signal and tuning a transmission wavelength of the respective tunable optical filter until the wavelength availability signal is transmitted by the filter (16);
ii. generating a wavelength sequence of the respective operating wavelengths of the identified ports;
iii. sequentially setting the transmission wavelength of the tunable optical filter at the wavelengths of the wavelength sequence and generating and transmitting a handshake signal at each wavelength until the wavelength availability signal is no longer received (20, 22, 28);
c. at said selected port, determining a number of handshake signals received at its respective operating wavelength (24), and
if more than one handshake signal has been received, continuing transmission of the wavelength availability signal (26), and
if only one handshake signal has been received, ceasing transmission of the wavelength availability signal and assigning the optical network terminal which transmitted said handshake signal to said selected port for operation at its operating wavelength (30).

2. A method as claimed in claim 1, wherein a. comprises generating a wavelength availability signal indicative of a respective operating wavelength of each of said plurality of identified ports and transmitting the wavelength availability signal from each of said plurality of identified ports (44), and c. comprises, at each of said plurality of identified ports, determining a number of handshake signals received at the respective operating wavelength (46), and
if more than one handshake signal has been received at a said port, continuing transmission of the wavelength availability signal from said port (26), and
if only one handshake signal has been received at said port, ceasing transmission of the wavelength availability signal from each of said plurality of identified ports and assigning the optical network terminal which transmitted said handshake signal to said port for operation at its respective operating wavelength, and recommencing the method at a. (30).

3. A method as claimed in claim 2, wherein a. comprises identifying every port of the optical line terminal which does not have a said optical network terminal assigned to it and generating a wavelength availability signal indicative of a respective operating wavelength of every said identified port and transmitting the wavelength availability signal from every said identified port (44), and c. comprises, at every said identified port, determining a number of handshake signals received at the respective operating wavelength (46), and
if more than one handshake signal has been received at a said port, continuing transmission of the wavelength availability signal from said port (26), and
if only one handshake signal has been received at said port, ceasing transmission of the wavelength availability signal from every said identified port and assigning the optical network terminal which transmitted said handshake signal to said port for operation at its respective operating wavelength, and recommencing the method at a. (30).

4. A method as claimed in any preceding claim, wherein each wavelength sequence is generated (14, 44) by selecting the received operating wavelengths of the unassigned ports from a random sequence of a plurality of transmission wavelengths of the network.

5. A method as claimed in any preceding claim, wherein each wavelength availability signal and each handshake signal has a bit rate which is lower than a transmission bit rate at which each optical line terminal port is arranged to transmit signals carrying communications traffic.

6. An optical line terminal (50) for a wavelength division multiplexed passive optical network, the optical line terminal comprising:
a plurality of ports (52) each having a respective operating wavelength; and
configuration control apparatus (54) arranged to:
a. identify a plurality of ports each of which does not have an optical network terminal assigned to it;
b. select a said port, and generate and transmit a wavelength availability signal (56) from the selected port indicative of a respective operating wavelength of each identified port;
c. determine a number of handshake signals (58) received at the selected port at its respective operating wavelength, and
if more than one handshake signal has been received, continue transmission of the wavelength availability signal, and
if only one handshake signal has been received, cease transmission of the wavelength availability signal and assign the optical network terminal from which the handshake signal was received to the selected port for operation at its operating wavelength.

7. An optical line terminal as claimed in claim 6, wherein the optical network terminal configuration apparatus (54) is arranged to:
b. generate a wavelength availability signal (56) indicative of a respective operating wavelength of each of said plurality of identified ports and transmit the wavelength availability signal from each of said plurality of identified ports; and
c. determine a number of handshake signals (58) received at each of said plurality of identified ports at the respective operating wavelength, and if more than one handshake signal has been received at a said port, continue transmission of the wavelength availability signal from said port, and if only one handshake signal has been received at a said port, cease transmission of the wavelength availability signal from each of said plurality of identified ports and assign the optical network terminal which transmitted said handshake signal to said port for operation at its respective operating wavelength, and recommence step a.

8. An optical line terminal as claimed in claim 7, wherein the optical network terminal configuration apparatus (54) is arranged to:
a. identify every port which does not have an optical network terminal assigned to it;
b. generate and transmit a wavelength availability signal (56) from every said identified port indicative of a respective operating wavelength of every said identified port;
c. determine a number of handshake signals (58) received at every said identified port at its respective operating wavelength, and
if more than one handshake signal has been received at a said port, continue transmission of the wavelength availability signal, and
if only one handshake signal has been received at a said port, cease transmission of the wavelength availability signal from every said identified port and assign the optical network terminal from which the handshake signal was received to said port for operation at its operating wavelength, and recommence step a.

9. An optical line terminal as claimed in any of claims 6 to 8, wherein each wavelength availability signal has a bit rate which is lower than a transmission bit rate at which each optical line terminal port (52) is arranged to transmit signals carrying communications traffic.

10. A method (100) of configuring an optical line terminal of a wavelength division multiplexed passive optical network, the optical line terminal comprising a plurality of ports each having a respective operating wavelength, the method comprising:
a. identifying a plurality of said ports each of which does not have an optical network terminal assigned to it (12);
b. selecting a said port (12), and generating and transmitting a wavelength availability signal from the selected port indicative of a respective operating wavelength of each identified port (14);
c. determining a number of handshake signals received at the selected port at its respective operating wavelength (24), and
if more than one handshake signal has been received, continuing transmission of the wavelength availability signal (26), and
if only one handshake signal has been received, ceasing transmission of the wavelength availability signal and assigning the optical network terminal from which the handshake signal was received to the selected port for operation at its operating wavelength (30).

11. An optical network terminal (60, 80) for a passive optical network, the optical network terminal being arranged to receive a wavelength availability signal (62) indicative of a respective operating wavelength of a plurality of unassigned ports of an optical line terminal of the passive optical network, the optical network terminal comprising:
a tunable optical filter (64) having a transmission wavelength; and
configuration control apparatus (68) arranged to:
i. tune the transmission wavelength of the tunable optical filter until the wavelength availability signal is transmitted by the filter;
ii. generate a wavelength sequence of the respective operating wavelengths of said plurality of unassigned ports; and
iii. sequentially set the transmission wavelength of the tunable optical filter at the wavelengths of the wavelength sequence and generate and transmit a handshake signal (72) at each wavelength until the wavelength availability signal is no longer received.

12. An optical network terminal as claimed in claim 11, wherein the optical network terminal further comprises a random sequence generator (82) arranged to generate a random sequence of a plurality of transmission wavelengths of the network and the configuration control apparatus (68) is arranged to:
ii. select the received operating wavelengths of said plurality of unassigned ports from the random sequence to form a wavelength sequence of the respective operating wavelengths of the unassigned ports.

13. An optical network terminal as claimed in claim 11 or claim 12, wherein each handshake signal (72) has a bit rate which is lower than a transmission bit rate at which each optical network terminal port is arranged to transmit signals carrying communications traffic.

14. A method (110) of configuring an optical network terminal of a passive optical network, the optical network terminal comprising a tunable optical filter and being arranged to receive a wavelength availability signal indicative of a respective operating wavelength of a plurality of unassigned ports of an optical line terminal of the passive optical network, the method comprising:
i. tuning a transmission wavelength of the tunable optical filter until the wavelength availability signal is transmitted by the filter (112);
ii. generating a wavelength sequence of the respective operating wavelengths of said plurality of unassigned ports (114); and
iii. sequentially setting the transmission wavelength of the tunable optical filter at the wavelengths of the wavelength sequence (116) and generating and transmitting a handshake signal at each wavelength until the wavelength availability signal is no longer received (118, 120, 122, 124).

15. A wavelength division multiplexed passive optical network (120) comprising:
an optical line terminal (50) as claimed in any of claims 6 to 9;
a plurality of optical network terminals (60) as claimed in any of claims 11 to 13;
a remote node (122);
a distribution fibre (124) coupled between the optical line terminal and the remote node; and
a plurality of feeder fibres (126) each coupled between the remote node and a respective said optical network terminal.

## Patentansprüche

1. Verfahren (10, 40) zum Konfigurieren eines passiven optischen Wellenlängenmultiplexnetzes, das ein optisches Leitungsendgerät und eine Mehrzahl von optischen Netzendgeräten umfasst, die jeweils ein abstimmbares optisches Filter umfassen, wobei das Verfahren umfasst:
a. Identifizieren einer Mehrzahl von Ports des optischen Leitungsendgeräts, von welchen keiner ein optisches Netzendgerät ihm zugeordnet aufweist (14), Auswählen eines der Ports (12) und Erzeugen und Übertragen eines Wellenlängenverfügbarkeitssignals vom ausgewählten Port, das eine jeweilige Betriebswellenlänge jedes identifizierten Ports anzeigt (14);
b. an jedem einer Mehrzahl von nicht zugeordneten optischen Netzendgeräten:
i. Empfangen des Wellenlängenverfügbarkeitssignals und Abstimmen einer Übertragungswellenlänge des jeweiligen abstimmbaren optischen Filters, bis das Wellenlängenverfügbarkeitssignal durch das Filter übertragen wird (16);
ii. Erzeugen einer Wellenlängenfolge der jeweiligen Betriebswellenlängen der identifizierten Ports;
iii. sequenzielles Festlegen der Übertragungswellenlänge des abstimmbaren optischen Filters bei den Wellenlängen der Wellenlängenfolge und Erzeugen und Übertragen eines Handshake-Signals bei jeder Wellenlänge, bis das Wellenlängenverfügbarkeitssignal nicht mehr empfangen wird (20, 22, 28);
c. Bestimmen am ausgewählten Port einer Anzahl von Handshake-Signalen, die bei seiner jeweiligen Betriebswellenlänge empfangen werden (24), und
Fortfahren, wenn mehr als ein Handshake-Signal empfangen wurde, mit der Übertragung des Wellenlängenverfügbarkeitssignals (26), und
Aufhören, wenn nur ein Handshake-Signal empfangen wurde, mit der Übertragung des Wellenlängenverfügbarkeitssignals und Zuordnen des optischen Netzendgeräts, welches das Handshake-Signal sendete, zum ausgewählten Port zum Betrieb bei seiner Betriebswellenlänge (30).

2. Verfahren nach Anspruch 1, wobei a. ein Erzeugen eines Wellenlängenverfügbarkeitssignals, das eine jeweilige Betriebswellenlänge jedes der Mehrzahl von identifizierten Ports anzeigt, und Übertragen des Wellenlängenverfügbarkeitssignals von jedem der Mehrzahl von identifizierten Ports umfasst (44), und c. ein Bestimmen an jedem der Mehrzahl von identifizierten Ports einer Anzahl von Handshake-Signalen umfasst, die bei der jeweiligen Betriebswellenlänge empfangen werden (46), und
Fortfahren, wenn mehr als ein Handshake-Signal an einem der Ports empfangen wurde, mit der Übertragung des Wellenlängenverfügbarkeitssignals vom Port (26), und
Aufhören, wenn nur ein Handshake-Signal am Port empfangen wurde, mit der Übertragung des Wellenlängenverfügbarkeitssignals von jedem der Mehrzahl von identifizierten Ports und Zuordnen des optischen Netzendgeräts, welches das Handshake-Signal sendete, zum Port zum Betrieb bei seiner jeweiligen Betriebswellenlänge und Wiederbeginnen mit dem Verfahren bei a. (30).

3. Verfahren nach Anspruch 2, wobei a. ein Identifizieren jedes Ports des optischen Leitungsendgeräts, das kein optisches Netzendgerät ihm zugeordnet aufweist, und Erzeugen eines Wellenlängenverfügbarkeitssignals, das eine jeweilige Betriebswellenlänge jedes identifizierten Ports anzeigt, und Übertragen des Wellenlängenverfügbarkeitssignals von jedem identifizierten Port umfasst (44), und c. ein Bestimmen an jedem identifizierten Port einer Anzahl von Handshake-Signalen umfasst, die bei der jeweiligen Betriebswellenlängen empfangen werden (46), und
Fortfahren, wenn mehr als ein Handshake-Signal an einem der Ports empfangen wurde, mit der Übertragung des Wellenlängenverfügbarkeitssignals vom Port (26), und
Aufhören, wenn nur ein Handshake-Signal am Port empfangen wurde, mit der Übertragung des Wellenlängenverfügbarkeitssignals von jedem identifizierten Port und Zuordnen des optischen Netzendgeräts, welches das Handshake-Signal sendete, zum Port zum Betrieb bei seiner jeweiligen Betriebswellenlänge und Wiederbeginnen mit dem Verfahren bei a. (30).

4. Verfahren nach einem der vorhergehenden Ansprüche, wobei jede Wellenlängenfolge durch Auswählen der empfangenen Betriebswellenlängen der nicht zugeordneten Ports aus einer Zufallsfolge einer Mehrzahl von Übertragungswellenlängen des Netzes erzeugt wird (14, 44).

5. Verfahren nach einem der vorhergehenden Ansprüche, wobei jedes Wellenlängenverfügbarkeitssignal und jedes Handshake-Signal eine Bitrate aufweisen, welche niedriger als eine Übertragungsbitrate ist, bei welcher Kommunikationsverkehr übermittelnde Signale zu übertragen jeder optische Leitungsendgeräteport ausgelegt ist.

6. Optisches Leitungsendgerät (50) für ein passives optisches Wellenlängenmultiplexnetz, wobei das optische leitungsendgerät umfasst:
eine Mehrzahl von Ports (52), welche jeweils eine jeweilige Betriebswellenlänge aufweisen; und
Konfigurationssteuervorrichtung (54), die ausgelegt ist zum:
a. Identifizieren einer Mehrzahl von Ports, von welchen keiner ein optisches Netzendgerät ihm zugeordnet aufweist;
b. Auswählen eines der Ports und Erzeugen und Übertragen eines Wellenlängenverfügbarkeitssignals (52) vom ausgewählten Port, das eine jeweilige Betriebswellenlänge jedes identifizierten Ports anzeigt;
c. Bestimmen einer Anzahl von Handshake-Signalen (58), die am ausgewählten Port bei seiner jeweiligen Betriebswellenlänge empfangen werden, und
Fortfahren, wenn mehr als ein Handshake-Signal empfangen wurde, mit der Übertragung des Wellenlängenverfügbarkeitssignals, und
Aufhören, wenn nur ein Handshake-Signal empfangen wurde, mit der Übertragung des Wellenlängenverfügbarkeitssignals und Zuordnen des optischen Netzendgeräts, von welchem das Handshake-Signal empfangen wurde, zum ausgewählten Port zum Betrieb bei seiner Betriebswellenlänge.

7. Optisches Leitungsendgerät nach Anspruch 6, wobei die Konfigurationsvorrichtung (54) des optischen Netzendgeräts ausgelegt ist zum:
b. Erzeugen eines Wellenlängenverfügbarkeitssignals (56), das eine jeweilige Betriebswellenlänge jedes der Mehrzahl von identifizierten Ports anzeigt, und Übertragen des Wellenlängenverfügbarkeitssignals von jedem der Mehrzahl von identifizierten Ports; und
c. Bestimmen einer Anzahl von Handshake-Signalen (58), die an jedem der Mehrzahl von identifizierten Ports bei seiner jeweiligen Betriebswellenlänge empfangen werden, und
Fortfahren, wenn mehr als ein Handshake-Signal an einem der Ports empfangen wurde, mit der Übertragung des Wellenlängenverfügbarkeitssignals vom Port, und
Aufhören, wenn nur ein Handshake-Signal an einem der Ports empfangen wurde, mit der Übertragung des Wellenlängenverfügbarkeitssignals von jedem der Mehrzahl von identifizierten Ports und Zuordnen des optischen Netzendgeräts, welches das Handshake-Signal sendete, zum ausgewählten Port zum Betrieb bei seiner Betriebswellenlänge, und Wiederbeginnen mit Schritt a.

8. Optisches Leitungsendgerät nach Anspruch 7, wobei die Konfigurationsvorrichtung (54) des optischen Netzendgeräts ausgelegt ist zum:
a. Identifizieren jedes Ports, der kein optisches Netzendgerät ihm zugeordnet aufweist;
b. Erzeugen und Übertragen eines Wellenlängenverfügbarkeitssignals (52) von jedem identifizierten Port, das eine jeweilige Betriebswellenlänge jedes identifizierten Ports anzeigt;
c. Bestimmen einer Anzahl von Handshake-Signalen (58), die an jedem identifizierten Port bei seiner jeweiligen Betriebswellenlänge empfangen werden, und
Fortfahren, wenn mehr als ein Handshake-Signal an einem der Ports empfangen wurde, mit der Übertragung des Wellenlängenverfügbarkeitssignals, und
Aufhören, wenn nur ein Handshake-Signal an einem der Ports empfangen wurde, mit der Übertragung des Wellenlängenverfügbarkeitssignals von jedem identifizierten Port und Zuordnen des optischen Netzendgeräts, von welchem das Handshake-Signal empfangen wurde, zum Port zum Betrieb bei seiner Betriebswellenlänge, und Wiederbeginnen mit Schritt a.

9. Optisches Leitungsendgerät nach einem vorhergehenden Ansprüche 6 bis 8, wobei jedes Wellenlängenverfügbarkeitssignal eine Bitrate aufweist, welche niedriger als eine Übertragungsbitrate ist, bei welcher Kommunikationsverkehr übermittelnde Signale zu übertragen jeder optische Leitungsendgeräteport (52) ausgelegt ist.

10. Verfahren (100) zum Konfigurieren eines optischen Leitungsendgeräts eines passiven optischen Wellenlängenmultiplexnetzes, wobei das optische Leitungsendgerät eine Mehrzahl von Ports aufweist, welche jeweils eine jeweilige Betriebswellenlänge aufweisen, wobei der Verfahren umfasst:
a. Identifizieren einer Mehrzahl von Ports, von welchen keiner ein optisches Netzendgerät ihm zugeordnet aufweist (12);
b. Auswählen eines der Ports (12) und Erzeugen und Übertragen eines Wellenlängenverfügbarkeitssignals vom ausgewählten Port, das eine jeweilige Betriebswellenlänge jedes identifizierten Ports anzeigt (14);
c. Bestimmen einer Anzahl von Handshake-Signalen, die am ausgewählten Port bei seiner jeweiligen Betriebswellenlänge empfangen werden (24), und
Fortfahren, wenn mehr als ein Handshake-Signal empfangen wurde, mit der Übertragung des Wellenlängenverfügbarkeitssignals (26), und
Aufhören, wenn nur ein Handshake-Signal empfangen wurde, mit der Übertragung des Wellenlängenverfügbarkeitssignals und Zuordnen des optischen Netzendgeräts, von welchem das Handshake-Signal empfangen wurde, zum ausgewählten Port zum Betrieb bei seiner Betriebswellenlänge (30).

11. Optisches Netzendgerät (60, 80) für ein passives optisches Netz, wobei das optische Netzendgerät so ausgelegt ist, dass es ein Wellenlängenverfügbarkeitssignal empfängt (62), das eine jeweilige Betriebswellenlänge einer Mehrzahl von nicht zugeordneten Ports eines optischen Leitungsendgeräts des passiven optischen Netzes anzeigt, wobei das optische Netzendgerät umfasst:
ein abstimmbares Filter (64) mit einer Übertragungswellenlänge; und
Konfigurationssteuervorrichtung (68), die ausgelegt ist zum:
i. Abstimmen der Übertragungswellenlänge des abstimmbaren optischen Filters, bis das Wellenlängenverfügbarkeitssignal durch das Filter übertragen wird;
ii. Erzeugen einer Wellenlängenfolge der jeweiligen Betriebswellenlängen der Mehrzahl von nicht zugeordneten Ports; und
iii. sequenzielles Festlegen der Übertragungswellenlänge des abstimmbaren optischen Filters bei den Wellenlängen der Wellenlängenfolge und Erzeugen und Übertragen eines Handshake-Signals (72) bei jeder Wellenlänge, bis das Wellenlängenverfügbarkeitssignal nicht mehr empfangen wird.

12. Optisches Netzendgerät nach Anspruch 11, wobei das optische Netzendgerät ferner einen Zufallsfolgengenerator (2) umfasst, der so ausgelegt ist, dass er eine Zufallsfolge einer Mehrzahl von Übertragungswellenlängen des Netzes erzeugt, und die Konfigurationssteuervorrichtung (68) ausgelegt ist zum:
ii. Auswählen der empfangenen Betriebswellenlängen der Mehrzahl von nicht zugeordneten Ports aus der Zufallsfolge, um eine Wellenlängenfolge der jeweiligen Betriebswellenlängen der nicht zugeordneten Ports zu bilden.

13. Optisches Netzendgerät nach Anspruch 11 bis 12, wobei jedes Handshake-Signal (72) eine Bitrate aufweist, welche niedriger als eine Übertragungsbitrate ist, bei welcher jeder optische Netzendgeräteport zum Übertragen von Kommunikationsverkehr übermittelnden Signalen ausgelegt ist.

14. Verfahren (110) zum Konfigurieren eines optischen Netzendgeräts eines passiven optischen Netzes, wobei das optische Netzendgerät ein abstimmbares optisches Filter ausweist und so ausgelegt ist, dass es ein Wellenlängenverfügbarkeitssignal empfängt, das eine jeweilige Betriebswellenlänge einer Mehrzahl von nicht zugeordneten Ports eines optischen Leitungsendgeräts des passiven optischen Netzes anzeigt, wobei das Verfahren umfasst:
i. Abstimmen einer Übertragungswellenlänge des abstimmbaren optischen Filters, bis das Wellenlängenverfügbarkeitssignal durch das Filter übertragen wird (112);
ii. Erzeugen einer Wellenlängenfolge der jeweiligen Betriebswellenlängen der Mehrzahl von nicht zugeordneten Ports (114); und
iii. sequenzielles Festlegen der Übertragungswellenlänge des abstimmbaren optischen Filters bei den Wellenlängen der Wellenlängenfolge (116) und Erzeugen und Übertragen eines Handshake-Signals bei jeder Wellenlänge, bis das Wellenlängenverfügbarkeitssignal nicht mehr empfangen wird (118, 120, 122, 124).

15. Passives optisches Wellenlängenmultiplexnetz (120), umfassend:
ein optisches Leitungsendgerät (50) nach einem der Ansprüche 6 bis 9;
eine Mehrzahl von optischen Netzendgeräten (60) nach einem der Ansprüche 11 bis 13;
einen abgesetzten Koten (122;
eine Verteilungsfaser (124), die zwischen das optische Leitungsendgerät und den abgesetzten Knoten gekoppelt ist; und
eine Mehrzahl von Zubringerfasern (126), die jeweils zwischen den abgesetzten Knoten und ein jeweiliges optisches Netzendgerät gekoppelt sind.

## Revendications

1. Procédé (10,40) de configuration d'un réseau optique passif de multiplexage par répartition en longueur d'onde comprenant un terminal de ligne optique et une pluralité de terminaux de réseau optique, comprenant chacun un filtre optique accordable, le procédé comprenant de :
a. identifier une pluralité de ports du terminal de ligne optique, dont chacun d'ont pas un terminal de réseau optique assigné (12), sélectionner un port (12), et générer et transmettre un signal de disponibilité de longueur d'onde à partir du port sélectionné indicatif d'une longueur d'onde de fonctionnement respective de chaque port identifié (14) ;
b. à chacun d'une pluralité de terminaux de réseau optique non assignés .
i. recevoir le signal de disponibilité de longueur d'onde et accorder une longueur d'onde de transmission du filtre optique accordable respectif jusqu'à ce que le signal de disponibilité de longueur d'onde soit transmis par le filtre (16) ;
ii. générer une séquence de longueur d'onde des longueurs d'onde de fonctionnement respectives de sports identifiés ;
iii. régler séquentiellement la longueur d'onde de transmission du filtre optique accordable aux longueurs d'ondes de la séquence de longueur d'onde et générer et transmettre un signal d'établissement de liaison à chaque longueur d'onde jusqu' à ce que le signal de disponibilité de longueur d'onde ne soit plus reçu (20,22,28) ;
c. au niveau dudit port sélectionné, déterminer un nombre de signaux d'établissement de liaison reçus à sa longueur d'onde de fonctionnement respective (24), et
si plus d'un signal d'établissement de liaison a été reçu, continuer la transmission du signal de disponibilité de longueur d'onde (26), et
si seulement un signal d'établissement de liaison a été reçu, cesser la transmission du signal de disponibilité de longueur d'onde et assigner le terminal de réseau optique qui a transmis ledit signal d'établissement de liaison audit port sélectionné en vue d'un fonctionnement à sa longueur d'onde d'exploitation (30).

2. Procédé selon la revendication 1, dans lequel a. comprend de générer un signal de disponibilité de longueur d'onde indicatif d'une longueur d'onde de fonctionnement respective de chacun de ladite pluralité de ports identifiés et transmettre le signal de disponibilité de longueur d'onde depuis chacun de ladite pluralité de ports identifiés (44), et c. comprend, à chacun de ladite pluralité de ports identifiés, de déterminer un nombre de signaux d'établissement de liaison reçus à la longueur d'onde de fonctionnement respective (46), et
si plus d'un signal d'établissement de liaison a été reçu au niveau dudit port, continuer la transmission du signal de disponibilité de longueur d'onde depuis ledit port(26), et
si seulement un signal d'établissement de liaison a été reçu, cesser la transmission du signal de disponibilité de longueur d'onde depuis chacun de ladite pluralité de ports identifiés et assigner le terminal de réseau optique qui a transmis ledit signal d'établissement de liaison audit port sélectionné en vue d'un fonctionnement à sa longueur d'onde d'exploitation, et recommencer le procédé à a.(30).

3. Procédé selon la revendication 2, dans lequel a. comprend d'identifier chaque port du terminal de ligne optique qui n'a pas un terminal de réseau optique assigné et générer un signal de disponibilité de longueur d'onde indicatif d'une longueur d'onde de fonctionnement respective de chaque port identifié et transmettre le signal de disponibilité de longueur d'onde depuis chaque dit port identifié (44), et c. comprend, à chaque port identifié, de déterminer un nombre de signaux d'établissement de liaison reçus à la longueur d'onde de fonctionnement respective (46), et
si plus d'un signal d'établissement de liaison a été reçu au niveau dudit port, continuer la transmission du signal de disponibilité de longueur d'onde depuis ledit port (26), et
si seulement un signal d'établissement de liaison a été reçu, cesser la transmission du signal de disponibilité de longueur d'onde depuis chaque dit port identifié et assigner le terminal de réseau optique qui a transmis ledit signal d'établissement de liaison audit port en vue d'un fonctionnement à sa longueur d'onde d'exploitation respective, et recommencer le procédé à a. (30).

4. Procédé selon une quelconque des revendications précédentes, dans lequel chaque séquence de longueur d'onde est générée (14,44) en sélectionnant les longueurs d'onde de fonctionnement reçues des ports non assignés dans une séquence aléatoire d'une pluralité de longueurs d'ondes de transmission du réseau.

5. Procédé selon une quelconque des revendications précédentes, dans lequel chaque signal de disponibilité de longueur d'onde et chaque signal d'établissement de liaison a un débit inférieur à un débit de transmission auquel chaque port de terminal de ligne optique est agencé pour transmettre les signaux portant le trafic de communication.

6. Terminal de ligne optique (50) pour un réseau optique passif multiplexé par répartition en longueur d'onde, le terminal de ligne optique comprenant :
une pluralité de ports (52) ayant chacun une longueur d'onde de fonctionnement respective ; et un dispositif de commande de configuration (54) agencé pour :
a. identifier une pluralité de ports n'ayant pas chacun un terminal de réseau optique assigné ;
b. sélectionner un dit port, et générer et transmettre un signal de disponibilité de longueur d'onde (56) depuis le port sélectionné indicatif d'une longueur d'onde de fonctionnement respective de chaque port identifié ;
c. déterminer un nombre de signaux d'établissement de liaison (58) reçus au niveau du port sélectionné à sa longueur d'onde de fonctionnement respective, et
si plus d'un signal d'établissement de liaison a été reçu, continuer la transmission du signal de disponibilité de longueur d'onde, et
si seulement un signal d'établissement de liaison a été reçu, cesser la transmission du signal de disponibilité de longueur d'onde et assigner le terminal de réseau optique depuis lequel le signal d'établissement de liaison a été reçu vers le port sélectionné en vue d'un fonctionnement à sa longueur d'onde de fonctionnement.

7. Terminal de ligne optique selon la revendication 6, dans lequel le dispositif de configuration de terminal de réseau optique (54) est agencé pour :
b. générer un signal de disponibilité de longueur d'onde (56) indicatif d'une longueur d'onde de fonctionnement respective de chacun de ladite pluralité de ports identifiés et transmettre le signal de disponibilité de longueur d'onde depuis chacun de ladite pluralité de ports identifiés ; et
c. déterminer un nombre de signaux d'établissement de liaison (58) reçus à chacun de ladite pluralité de ports identifiés à la longueur d'onde de fonctionnement respective, et si plus d'un signal d'établissement de liaison a été reçu audit port, continuer la transmission du signal de disponibilité de longueur d'onde depuis ledit port, et si seulement un signal d'établissement de liaison a été reçu au niveau dudit port, cesser la transmission du signal de disponibilité de longueur d'onde depuis chacun de ladite pluralité de ports identifiés et assigner le terminal de réseau optique qui a transmis ledit signal d'établissement de liaison audit port en vue d'un fonctionnement à sa longueur d'onde de fonctionnement respective, et recommencer l'étape a.

8. Terminal de ligne optique selon la revendication 7, dans lequel le dispositif de configuration de terminal de ligne optique (54) est agencé afin de :
a. identifier chaque port qui n'a pas un terminal de réseau optique assigné ;
b. générer et transmettre un signal de disponibilité de longueur d'onde (56) depuis chaque port identifié indicatif d'une longueur d'onde de fonctionnement respective de chaque port identifié ;
c. déterminer un nombre de signaux d'établissement de liaison (58) reçus à chaque port identifié à sa longueur d'onde de fonctionnement respective, et
si plus d'un signal d'établissement de liaison a été reçu au niveau d'un dit port, continuer la transmission du signal de disponibilité de longueur d'onde, et
si seulement un signal d'établissement de liaison a été reçu au niveau d'un dit port, cesser la transmission du signal de disponibilité de longueur d'onde depuis chaque port identifié et assigner le terminal de réseau optique depuis lequel le signal d'établissement de liaison a été reçu vers ledit port en vue d'un fonctionnement à sa longueur d'onde de fonctionnement, et recommencer l'étape a.

9. Terminal de ligne optique selon une quelconque des revendications 6 à 8, dans lequel chaque signal de disponibilité de longueur d'onde a un débit inférieur à un débit de transmission auquel chaque port de terminal de ligne optique (52) est agencé afin d'émettre des signaux transportant le trafic de communications.

10. Procédé (100) de configuration d'un terminal de ligne optique d'un réseau optique passif multiplexé par répartition en longueur d'onde, le terminal de ligne optique comprenant une pluralité de ports ayant chacun une longueur d'onde de fonctionnement respective, le procédé comprenant de :
a. identifier une pluralité desdits ports n'ayant pas chacun un terminal de réseau optique assigné (12) ;
b. sélectionner un dit port (12), et générer et transmettre un signal de disponibilité de longueur d'onde depuis le port sélectionné indicatif d'une longueur d'onde de fonctionnement respective de chaque port identifié (14) ;
c. déterminer un nombre de signaux d'établissement de liaison reçus au port sélectionné à sa longueur d'onde de fonctionnement respective (24), et
si plus d'un signal d'établissement de liaison a été reçu, continuer la transmission du signal de disponibilité de longueur d'onde (26), et
si seulement un signal d'établissement de liaison a été reçu, cesser la transmission du signal de disponibilité de longueur d'onde et assigner le terminal de réseau optique depuis lequel la signal d'établissement de liaison a été reçu vers le port sélectionné en vue d'un fonctionnement à sa longueur d'onde de fonctionnement (30).

11. Terminal de réseau optique (60,80) pour réseau optique passif, le terminal de réseau optique étant agencé afin de recevoir un signal de disponibilité de longueur d'onde (62) indicatif d'une longueur d'onde de fonctionnement respective d'une pluralité de ports non assignés d'un terminal de ligne optique du réseau optique passif, le terminal de réseau optique comprenant :
un filtre optique accordable (64) ayant une longueur d'onde de transmission ; et un dispositif de commande de configuration (68) agencé afin de :
i. accorder la longueur d'onde de transmission du filtre optique accordable jusqu'à ce que le signal de disponibilité de longueur d'onde soit transmis par le filtre ;
ii. générer une séquence de longueur d'onde des longueurs d'ondes de fonctionnement respectives de ladite pluralité de ports non assignés ; et
iii. régler séquentiellement la longueur d'onde de transmission du filtre optique accordable aux longueurs d'ondes de la séquence de longueur d'onde et générer et transmettre un signal d'établissement de liaison (72) à chaque longueur d'onde jusqu'à ce que le signal de disponibilité de longueur d'onde ne soit plus reçu.

12. Terminal de réseau optique selon la revendication 11, dans lequel le terminal de réseau optique comprend en outre un générateur de séquence aléatoire (82) agencé afin de générer une séquence aléatoire d'une pluralité de longueurs d'ondes de transmission du réseau et le dispositif de commande de configuration (68) est agencé afin de :
ii. sélectionner les longueurs d'ondes de fonctionnement reçues de ladite pluralité de ports non assignés dans la séquence aléatoire pour former une séquence de longueur d'onde des longueurs d'ondes de fonctionnement respectives des ports non assignés.

13. Terminal de réseau optique selon les revendications 11 ou 12, dans lequel chaque signal d'établissement de liaison (72) a un débit inférieur à un débit de transmission auquel chaque port de de terminal de réseau optique est agencé afin d'émettre des signaux transportant le trafic de communications.

14. Procédé (10) de configuration d'un terminal de réseau optique d'un réseau optique passif, le terminal de réseau optique comprenant un filtre optique accordable et étant agencé afin de recevoir un signal de disponibilité de longueur d'onde indicatif d'une longueur d'onde de fonctionnement respective d'une pluralité de ports non assignés d'un terminal de ligne optique du réseau optique passif, le procédé comprenant de :
i. accorder la longueur d'onde de transmission du filtre optique accordable jusqu'à ce que le signal de disponibilité de longueur d'onde soit transmis par le filtre (112) ;
ii. générer une séquence de longueur d'onde des longueurs d'ondes de fonctionnement respectives de ladite pluralité de ports non assignés (114) ; et
iii. régler séquentiellement la longueur d'onde de transmission du filtre optique accordable aux longueurs d'ondes de la séquence de longueur d'onde (116) et générer et transmettre un signal d'établissement de liaison à chaque longueur d'onde jusqu'à ce que le signal de disponibilité de longueur d'onde ne soit plus reçu (118,120,122,124).

15. Réseau optique passif (120) multiplexé par répartition en longueur d'onde comprenant :^
un terminal de ligne optique (50) selon une quelconque des revendications 6 à 9 ;
une pluralité de terminaux de réseau optique (60) selon une quelconque des revendications 11 à 13 ;
un noeud distant (122) ;
une fibre de distribution (124) couplée entre le terminal de ligne optique et le noeud distant ; et
une pluralité de fibres d'alimentation (126) couplées chacune entre le noeud distant et un terminal de réseau optique respectif.
